# EUROPEAN PATENT APPLICATION

(11) **EP 1 533 987 A2**
(43) Date of publication of application: **25.05.2005**
(21) Application number: 04012492.7
(22) Date of filing: 26.05.2004
(51) Int. Cl.: H04N 1/00

(54) **Multifunction apparatus and distribution server**

(30) Priority: 19.11.2003 JP 2003389203
(71) Applicant: MATSUSHITA ELECTRIC INDUSTRIAL CO., LTD., Kadoma-shi, Osaka 571-8501 (JP)
(72) Inventor: Kitajima, Ikuo, Tokyo 177-0031 (JP); Ozaki, Minoru, Kawanishi-shi Hyogo 666-0033 (JP); Osanai, Akira, Yokohama-shi Kanagawa 220-0062 (JP); Matsuzawa, Yukari, Tokyo 152-0011 (JP); Sakamoto, Masakiyo, Tokyo 146-0093 (JP)
(74) Representative: Grünecker, Kinkeldey, Stockmair & Schwanhäusser Anwaltssozietät

(57) **Abstract**

Menus to be executed by an individual multifunction apparatus are pre-registered in a distribution server for each multifunction apparatus. When the distribution server receives a menu screen obtaining request, a model code, and a sort key from one of the multifunction apparatus, the distribution server accesses a multifunction apparatus menu registration table of the requesting multifunction apparatus and sorts the order of menus according to the sort key. Then, the distribution server transmits the sorted menu screen back to the multifunction apparatus. The multifunction apparatus displays the sorted menu screen, received from the distribution server, on an LCD of a panel. The order of the displayed menus is based on the order specified by the sort key.

## Description

### BACKGROUND OF THE INVENTION

### 1. Field of the Invention

The present invention relates to a multifunction apparatus that utilizes a menu necessary for an operation by receiving the menu via a network. The invention also relates to a distribution server that distributes such a menu to a plurality of multifunction apparatuses.

### 2. Description of Related Art

In recent years, it has become customary for multifunction apparatuses to obtain an address book in order to distribute scanned data to terminals (PCs) via a network. The distribution server generates such an address book for the scanned data distribution. In the address book, terminals and document management servers are defined. The multifunction apparatus obtains the address book by pressing an address obtaining button displayed on a panel, and obtains an address as a distribution destination of the scanned data. Then, the document scanning process is performed and the scanned data is transmitted, via the distribution server, to the distribution destination having the selected address.

Upon registering a menu, an apparatus has been also introduced, in which a user creates a menu screen that minimizes the number of operations to reach a desired menu and stores the menu (e.g., Related Art 1).

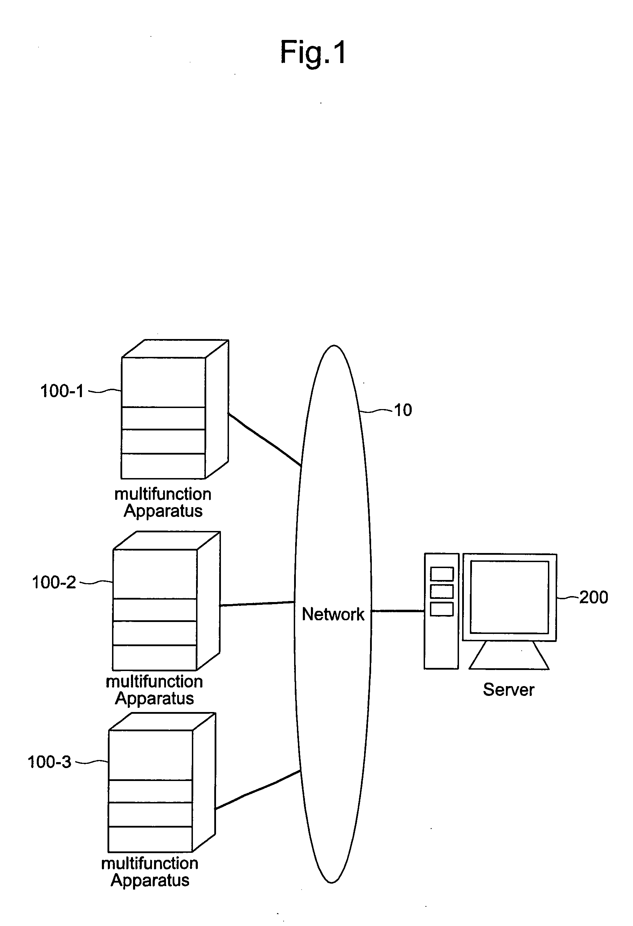

### [Related Art] Japanese Patent Laid Open Application H9-54668 (paragraph 0018; Fig.1)

However, the above-described conventional technology can only display menus in the order of registration. Since one multifunction apparatus is shared by a plurality of users, one user has to look for a desired menu from all menus. In addition, storing the menu information (to be used by the users) within the apparatus requires a storage memory.

### SUMMARY OF THE INVENTION

The present invention addresses the above-described problems. The purpose of the invention is to provide a multifunction apparatus and a distribution server that do not burden the memory capacity of the multifunction apparatus and that are more time saving for the user to find a desired menu from a plurality of menus.

According to the present invention, menus to be executed by an individual multifunction apparatus are pre-registered in a distribution server for each multifunction apparatus. When the distribution server receives a menu screen obtaining request and a sort key from one of the multifunction apparatus, the distribution server sorts, according to the sort key, the order of the menus registered for the requesting multifunction apparatus. Then, the distribution server transmits the sorted menu screen back to the multifunction apparatus.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and
wherein:
Fig. 1 illustrates a network configuration to which an embodiment of the present invention is applied;
Fig. 2 is a functional block diagram illustrating a multifunction apparatus of Fig. 1;
Fig. 3 is a schematic view of the multifunction apparatus of Fig. 2;
Fig. 4 is a plane view of a panel provided in the multifunction apparatus of Fig. 2;
Fig. 5 is a functional block diagram illustrating a distribution server of Fig. 1;
Fig. 6 (a) illustrates a configuration of a multifunction apparatus menu management table of a multifunction apparatus;
Fig. 6 (b) illustrates a configuration of the multifunction apparatus menu management table of another multifunction apparatus;
Fig. 6 (c) illustrates a configuration of the multifunction apparatus menu management table of yet another multifunction apparatus;
Fig. 7 is a flowchart illustrating a menu screen display operation at the multifunction apparatus and the distribution server;
Fig. 8 illustrates a configuration of an initial screen when a user logs into the distribution server;
Fig. 9 illustrates an example of a menu screen display;
Fig. 10 illustrates a transition of operation screens when the menu screen is displayed for the first time; and
Fig. 11 illustrates a transition of operation screens when the menu screen is displayed for the second time.

### DETAILED DESCRIPTION OF PREFERRED EMBODIMENTS

The embodiments of the distribution server system, provided by the multifunction apparatus and distribution server of the present invention, are explained in the following, in reference to the above-described drawings.

Fig. 1 illustrates a network configuration of the distribution server system. A plurality of multifunction apparatuses 100-1, 100-2 and 100-3, and distribution servers 200 are connected to network 10. Although network 10 can be configured with a local area network (LAN) or the Internet, this embodiment employs a LAN for network 10. Multifunction apparatus 100-1, 100-2, and 100-3 can be connected to network 10, and has a plurality of functions such as copier, printer, scanner, facsimile transmission/reception, and Internet communication functions. The multifunction apparatus of the present invention is not limited to the above-described functions.

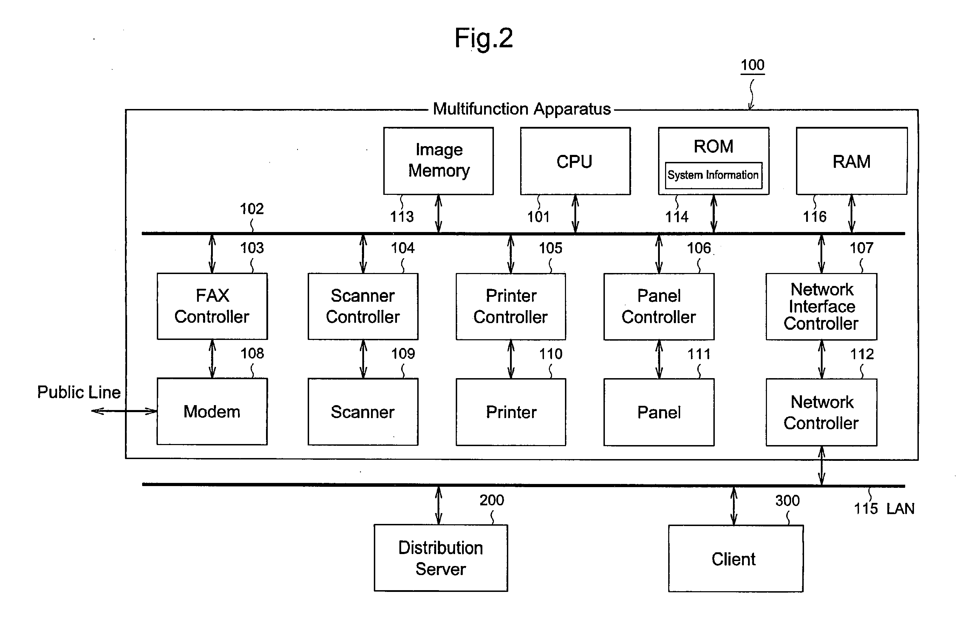

Fig. 2 is a detailed functional block diagram illustrating multifunction apparatus 100 (hereafter, "100" is used instead of "100-1, 100-2, and 100-3" when the 3 multifunction apparatuses are not differentiated). In Fig. 2, through CPU 101 and via internal bus 102, multifunction apparatus 100 connects FAX controller 103, scanner controller 104, printer controller 105, panel controller 106, and network interface controller 107. Via modem 108, fax controller 103 exchanges image data with image memory 113, in order to perform facsimile transmission and reception. Scanner controller 104 scans a document by controlling scanner 109 and stores image data in image memory 113. Printer controller 105 controls printer 110 to print the image data stored in image memory 113. Panel controller 106 retrieves menu information stored in RAM 116 and displays the data on panel 111. ROM 114 stores system information, which includes a model code (as multifunction apparatus identification information) and a sort key (later described). When there are a plurality of multifunction apparatuses of the same model, additional data is applied to the model code for identification purposes. When network interface controller 107 controls network controller 112 that exchanges data generated by distribution server 200 and client 300 on network 115.

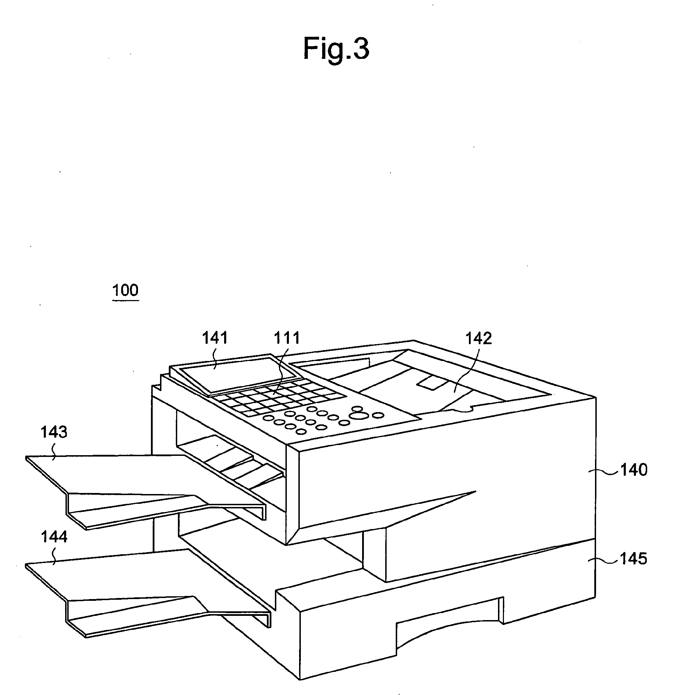

Fig. 3 is a schematic illustration of multifunction apparatus 100. In multifunction apparatus 100, scanner 109 and printer 110 are housed within body 140, together with other components such as CPU 101, ROM 114, and modem 108. Panel 111, having LCD 141, is located at the left side of the top surface of multifunction apparatus 100. At the right side of panel 111, document feeder 142 for feeding a document to scanner 109 is located. At the left side surface of multifunction apparatus 100, finisher trays 143 and 144, which receive ejected printed paper from printer 110, are aligned parallel in an approximately horizontal plane. Paper tray 145, which feeds paper to printer 110, is located at the bottom of multifunction apparatus 100.

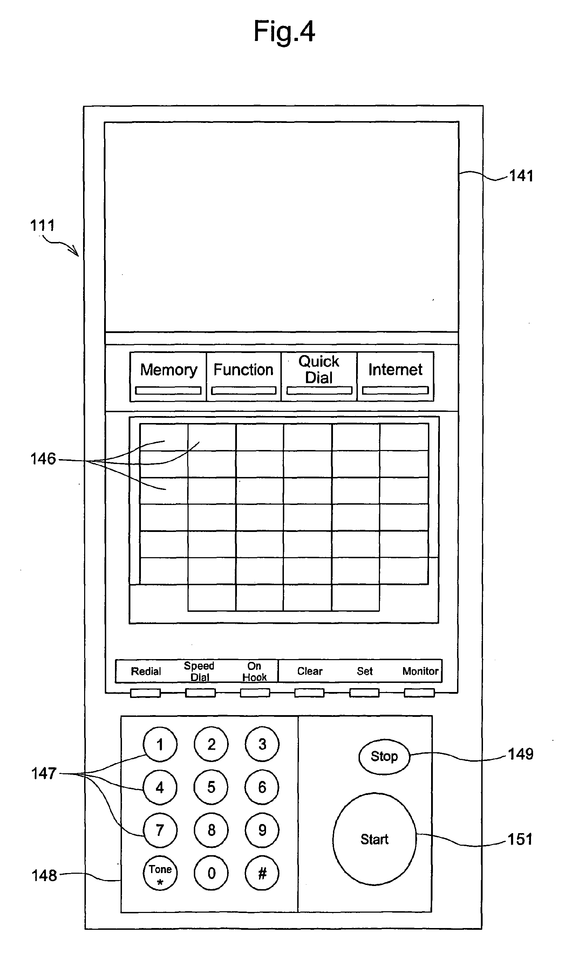

Fig. 4 is a plane view of panel 111 and LCD 141. At the lower end of LCD 141 includes a memory button, function button, quick dial button, and Internet button. The Internet button is pressed when an operator needs to switch the mode to the input mode for Internet facsimile communication.

A plurality of one-touch buttons 146 are aligned below the above-described buttons. Below one-touch buttons 146, a redial/pause button, speed dial button, sub-address/on-hook button, clear/monitor volume button, set button, and monitor button are provided. In addition, numeric part 148, having numeric keys 147, is located further below. Each numeric key 147 has alphabet letters applied to allow the alphabet input. At the right side of numeric part 148, stop button 149 and start button 151 are provided. The user inputs various data using numeric keys 147.

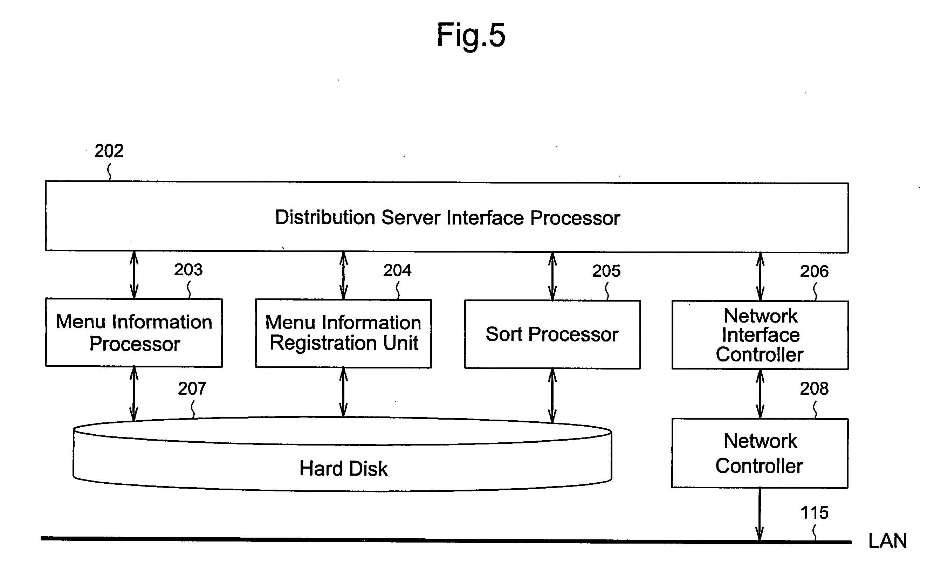

Fig. 5 is a functional block diagram of distribution server 200. In Fig. 5, distribution server interface processor 202 is connected to menu information processor 203, menu information registration unit 204, sort processor 205, and network interface controller 206.

Menu information processor 203 retrieves menu information from hard disk 207. Menu information registration unit 204 registers a job as a menu in hard disk 207, the job being executed (registering in a bulletin board, circulation, copying for distribution in a meeting, saving an important document, etc.) by each multifunction apparatus 100-1, 100-2, or 100-3. Sort processor 205 sorts menu in accordance with the sort keys.

Hard disk 207 stores, for each multifunction apparatuses, menu screen data that lists job names selectable from multifunction apparatuses 100-1, 100-2 and 100-3, and operation screen data that corresponds to each job. In addition, hard disk 207 stores a multifunction apparatus menu management table and a user information management table.

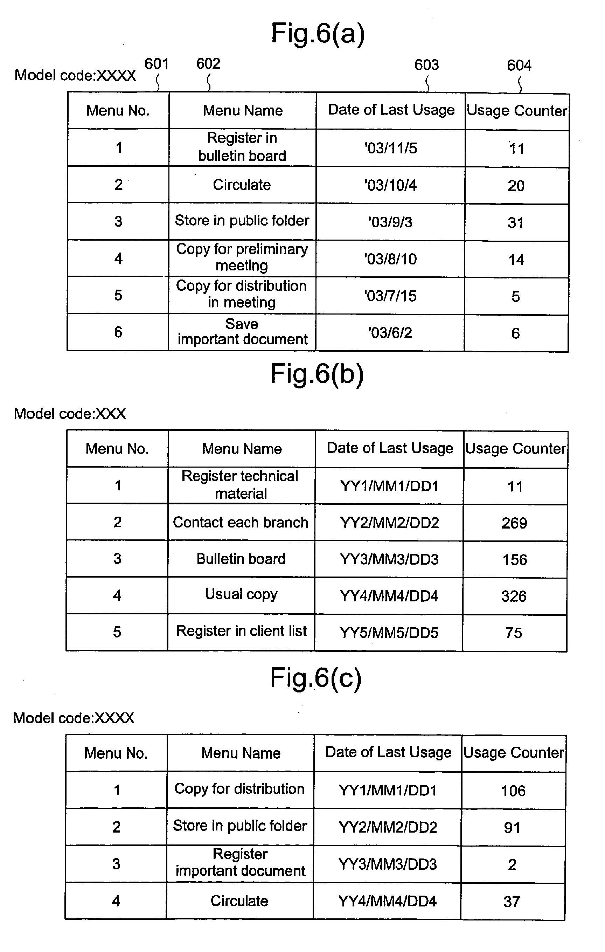

Figs. 6 (a), (b), and (c) illustrate configurations of the multifunction apparatus menu management tables. The tables are created for each multifunction apparatus. The multifunction apparatus menu management table lists items such as "menu number" 601 (a serial number applied to each menu registered in the table), "menu name" 602 (indicating a name of menu registered by the user), "date of last usage" 603 (indicating a last date on which a job corresponding to the menu name is performed), and "usage counter" 604 (indicating the number of times that the job corresponding to the menu name is executed). In this embodiment, "date of last usage" 603 and "usage counter" 604 are used as the "sort keys", but other types of sort keys can be arbitrarily set.

Fig. 6 (a) illustrates a multifunction apparatus menu management table for multifunction apparatus 100-1. The user has currently registered 6 jobs for multifunction apparatus 100-1. The most frequently used menu (job) is menu No. 3, "store in public folder". Fig. 6 (b) illustrates a multifunction apparatus menu management table for multifunction apparatus 100-2, whereas Fig. 6 (c) illustrates a multifunction apparatus menu management table for multifunction apparatus 100-3.

The following illustrates job data necessary for executing a job, corresponding to "menu name" that is registered in the multifunction apparatus menu management table of Fig. 6. A job ID and job parameter are stored, in association with "menu name", in the multifunction apparatus menu management table that is generated for each multifunction apparatus. For example, the multifunction apparatus menu management table registers , in association with "menu name", data necessary for executing a job: "copy for distribution in meeting" ("menu name"), using multifunction apparatus 100-1. The job "copy for distribution in meeting" requires job parameters including a paper size, resolution, color, monochrome, number of copies, etc. In addition, "copy function" needs to be specified for the use among other functions of multifunction apparatus 100-1. Therefore, a job ID and job parameters specifying the usage function (startup subject function) are registered, in association with "menu name", in the multifunction apparatus menu management table. Multifunction apparatus 100-1 can execute the job on the document, the job being identified by "menu name", using the job ID and the parameters. Similarly, the multifunction apparatus menu management table registers job IDs and job parameters for other jobs having different "menu names".

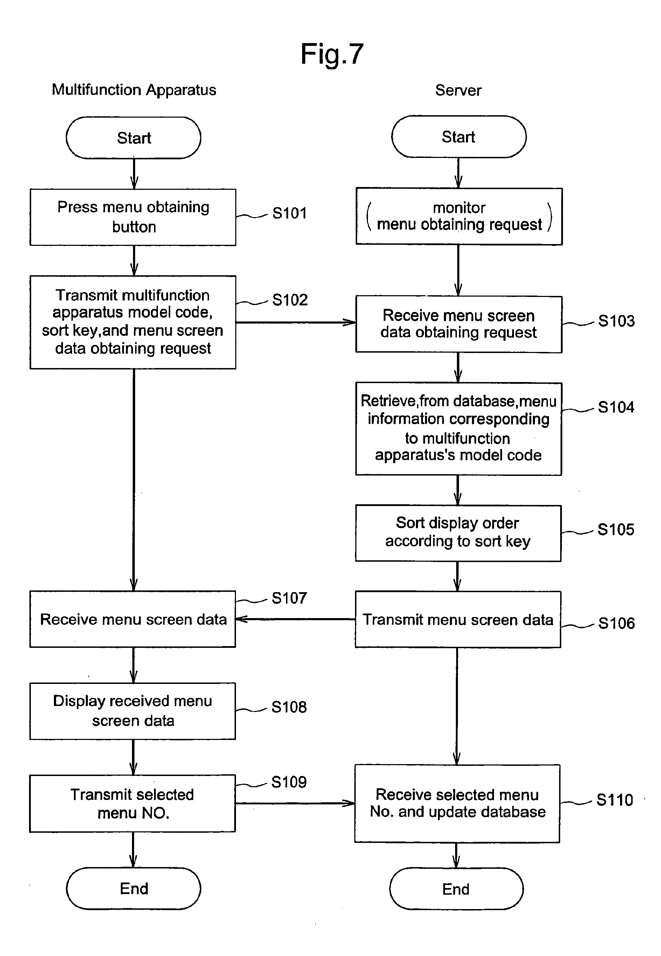

The operation of the present embodiment, having the above configuration, is illustrated as follows. Fig. 7 is a flowchart illustrating the menu selection at multifunction apparatus 100-1. The user, who has logged into distribution server 200 and selected a desired menu (job) from the registered menu in multifunction apparatus 100-1, operates panel 111 to display an initial screen for the login operation.

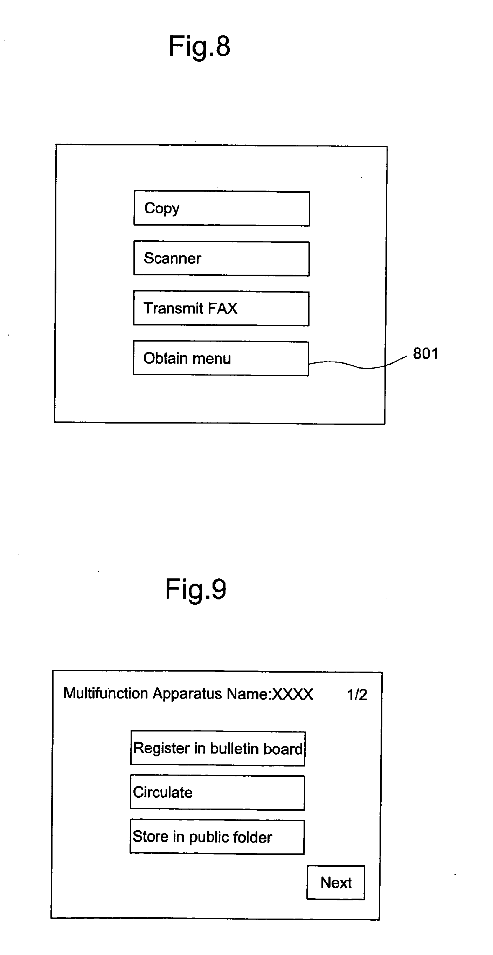

Multifunction apparatus 100-1 displays an initial screen (shown in Fig. 8) on LCD 141 according to the user's operation from the panel. The initial screen includes menu obtaining button 801, in addition to selection buttons for basic functions such as copying, scanning, and FAX transmission. When menu obtaining button 801 is pressed from the initial screen of Fig. 8 (S101), a menu screen obtaining request is transmitted to distribution server 200 (S102). When transmitting the menu screen obtaining request, the model code (multifunction apparatus identification information) of multifunction apparatus 100-1 and a sort key (for sorting menus) registered in multifunction apparatus 100-1 are also retrieved from ROM 114 and transmitted.

In addition, menu obtaining button 801 can be assigned as a function key of panel 111, or as a hard button on panel 111, instead of a soft button on the initial screen.

As shown in Fig. 9, the menu screen of the present embodiment is an operation screen that displays menu names registered in the multifunction apparatus menu management table of Fig. 6. In this embodiment, the maximum of 3 menu names are displayed in one operation screen, and a page scroll button is provided to view the next page. The menu screen shown in Fig. 9 is based on the multifunction apparatus menu management table shown in Fig. 6 (a).

Distribution server 200 receives the menu screen obtaining request, model code, and sort key (S103). Upon receiving the menu screen obtaining request, menu information processor 203 retrieves the menu screen data from hard disk 207. In particular, menu information processor 203 accesses a section of the multifunction apparatus menu management table having the same model code, and retrieves the table data of the multifunction apparatus (S104). Then, sort processor 205 sorts the menus included in the retrieved table data. To be specific, the menu name within the table data is sorted and displayed according to the received sort key (S105).

The following describes step S105 in detail. The illustration is based on the situation where multifunction apparatus 100-1 registers the multifunction apparatus menu management table of Fig. 6 (a), and "date" is registered as a sort key in the system information of ROM 114 of multifunction apparatus 100-1. In this case, sort processor 205 sorts the menu names in the order of "date of last usage", the menu names being registered in the multifunction apparatus menu management table of Fig. 6 (a). Accordingly, 6 registered menu names are sorted as 1-2-3-4-5-6 (menu numbers). When sort key registered in multifunction apparatus 100-1 is "counter", the menu names are sorted as 3-2-4-1-6-5 (menu numbers).

After the menu names are sorted by sort processor 205 in accordance with the sort key, the menu screen is transmitted from distribution server 200 to multifunction apparatus 100-1 (requester) (S 106).

Multifunction apparatus 100-1 receives the menu screen as a response to the menu screen obtaining request (S107). CPU 101 of multifunction apparatus 100-1 displays the received menu screen on LCD 141 (S108).

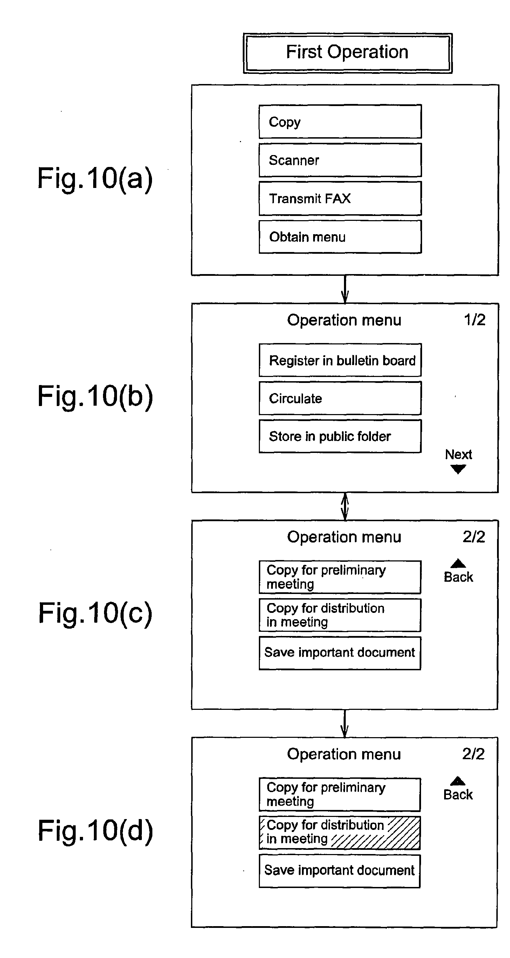

Fig. 10 illustrates a display example of the initial screen and menu screens that are displayed on LCD 141 of multifunction apparatus 100. In particular, Fig. 10 illustrates an example of the operation screens of multifunction apparatus 100-1, which is registered in the multifunction apparatus menu management table Fig. 6 (a). When the information is input in the initial screen (Fig. 10 (a)), the operation screen is changed to the menu screen (Fig. 10 (b)). When the next button is pressed, the next operation screen (Fig 10 (c)) is displayed.

Accordingly, even when a plurality of menus are registered in multifunction apparatus 100, the operation screen having the sorted menu names (according to the sort key) is displayed, thereby making it possible to provide a convenient operational environment. When "date" is set as the sort key, the menu names are displayed in the order of date of last usage. Therefore, it is likely that the desired menu name appears in a higher rank in the first screen. When "counter" is set as a sort key, the menu name is displayed in the order of frequency. Therefore, it is likely that the desired menu name appears in a higher rank in the first screen, in this operation.

The sort key can be set arbitrarily and is not limited to the above two examples. When setting a sort key, it is preferable that the sort key is registered in association with the menu name, in the multifunction apparatus menu management table of distribution server 200.

Multifunction apparatus 100-1 receives a selection from the displayed menu screen. As shown in Fig. 10 (d), the menu name selected by the user is highlighted. When the user confirms the selected job from the highlighted menu name, the information that specifies the highlighted menu name (menu number) is transmitted to distribution server 200 (S109).

When distribution server 200 receives the menu number from multifunction apparatus 100-1, menu information registration unit 204 accesses the multifunction apparatus menu management table of multifunction apparatus 100-1. Then, the "date of last usage" (for the received menu number) is updated into the current time, and the "usage counter" is incremented by 1 (S110).

Then, the operation screen and job data necessary to execute the job of the received menu number are transmitted to multifunction apparatus 100-1.

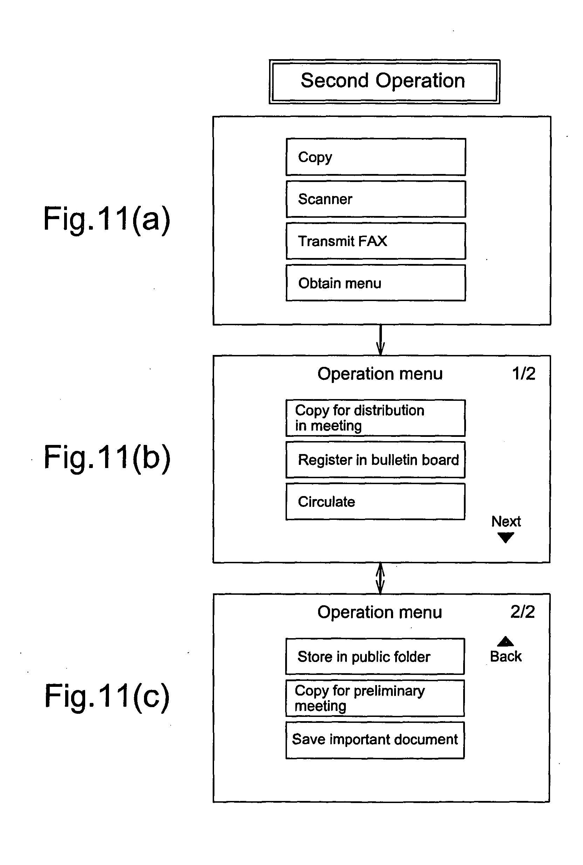

The updated "date of last usage" and "usage counter" are reflected for the next operation. Figs. 11 (a), (b), and (c) illustrate a transition of the operation screens when multifunction apparatus 100-1 having the model code XXX is operated for the second time. As shown in Fig. 10 (d), the operation immediately before has selected "copy to be distributed in meeting". When "date" is set as the sort key, the "date of last usage" of "copy to be distributed in meeting" is the most recent. Therefore, "copy to be distributed in meeting" is displayed in the top of the list as shown in Fig. 11 (d). Other menus are not selected, thus the order of the menu display is not changed.

According to the present embodiment, menu to be executed by each multifunction apparatus 100 is pre-registered in distribution server 200, and displayed through the menu screen on multifunction apparatus 100, in response to a menu screen obtaining request from multifunction apparatus 100. Accordingly, the menu can be registered without burdening the memory capacity of multifunction apparatus 100, thereby improving the operation environment of multifunction apparatus 100. In addition, menu names are sorted, according to the sort key, in the order requested by the user. Therefore, it is possible for the user to save time in finding a desired menu among many menus personally registered for the user.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2003-389203 filed on November 19, 2003, entire content of which is expressly incorporated by reference herein.

## Claims

1. A distribution server that distributes a menu to a plurality of multifunction apparatus, the menu being registered in each multifunction apparatus, the distribution server comprising:
a receiver that receives a menu screen obtaining request and a sort key from a multifunction apparatus;
a sorter that sorts menus in accordance with the sort key, the menus being registered for the multifunction apparatus that has made the obtaining request; and
a transmitter that transmits the menu screen to the requesting multifunction apparatus, the menu screen having the sorted menus.

2. The distribution server according to claim 1, wherein the sort key is a counted number of previous usages of each menu.

3. The distribution server according to claim 1, wherein the sort key is a date of last usage for each menu.

4. The distribution server according to claim 1, further comprising:
a multifunction apparatus menu management table for each multifunction apparatus, the table registering a menu name and a management item, menu name being of a registered menu, the management item being a sort key,
wherein, the management item of the multifunction apparatus menu management table is updated by obtaining updated information of the management item from the multifunction apparatus.

5. A multifunction apparatus that displays a plurality of menus and executes a menu chosen from the menus, the apparatus comprising:
a transmitter that transmits a menu screen obtaining request, multifunction apparatus identification information, and a sort key to a distribution server located on a network;
a receiver receives a menu screen displaying menus that are sorted in accordance with the sort key, the menu screen being received from the distribution server as a response to the obtaining request; and
a display that displays the received menu screen.

6. The multifunction apparatus according to claim 5, wherein a menu item displayed on the menu screen is a menu name of a menu registered, for the multifunction apparatus, in the distribution server.

7. An operation screen display method comprising:
receiving a menu screen obtaining request and a sort key at a distribution server, the obtaining request and the sort key being transmitted from a multifunction apparatus;
sorting menus in the order of the sort key, the menus being registered for the multifunction apparatus that has made the obtaining request; and
transmitting the menu screen from the distribution server to the requesting multifunction apparatus, the menu screen having the sorted menus.

8. An operation screen display method comprising:
transmitting a menu screen obtaining request, multifunction apparatus identification information, and a sort key from a multifunction apparatus to a distribution server, the server being located on a network;
receiving a menu screen at the multifunction apparatus, the menu screen being transmitted from the distribution server, as a response to the obtaining request, and displaying menus that are sorted according to the sort key;
displaying, on a display of the multifunction apparatus, the received menu screen; and
executing a selected menu from the displayed menu screen.
